Europäisches Patentamt

European Patent Office

Office européen des brevets

(11) Publication number: 0 159 170
A2

# EUROPEAN PATENT APPLICATION

(21) Application number: 85302433.9

(22) Date of filing: 04.04.85

(51) Int. Cl.⁴: B 29 C 65/16
B 29 C 65/60, B 23 K 26/00

(30) Priority: 10.04.84 JP 72255/84
24.04.84 JP 82318/84
05.09.84 JP 186228/84

(43) Date of publication of application:
23.10.85 Bulletin 85/43

(84) Designated Contracting States:
DE FR GB

(71) Applicant: TOYOTA JIDOSHA KABUSHIKI KAISHA
1, Toyota-cho Toyota-shi
Aichi-ken 471(JP)

(72) Inventor: Terasawa, Toshihisa
3 Chome 33 Aizuma-cho
Toyota-shi Aichi-ken(JP)

(72) Inventor: Nakamata, Hideo
4 Chome 15-7 Yokoyama-cho
Toyota-shi Aichi-ken(JP)

(72) Inventor: Ikari, Noriaki
6 Chome 1-20 Suigen-cho
Toyota-shi Aichi-ken(JP)

(74) Representative: Brock, Peter William et al,
Michael Burnside & Partners 2 Serjeants' Inn Fleet Street
London EC4Y 1HL(GB)

(54) A process for joining different kinds of synthetic resins.

(57) A process for joining two plates (10, 20) includes several steps. A first step is providing a first plate (10) made of a first kind of synthetic resin which will absorb a laser beam. A second step is setting a second plate (20) having a hole and formed of metal or a second synthetic resin on the first plate (10). The hole may be filled with a powder (90) of the first synthetic resin. A third step is exposing a portion (11) of the first plate (10) within the hole to a laser beam. The first kind of synthetic resin stores up the heat of the laser beam, so that the portion (11) of the first plate (10) is melted by the heat of the laser beam. A fourth step is inserting a glass or crystalline rod (60, 62) through the hole of the second plate (20) and into the melted first kind of synthetic resin. The melted first kind of synthetic resin thereby is pushed out from the hole in the second plate (20) to form a lip ring (13) of the first kind of synthetic resin. A fifth step is drawing out the rod (60, 62) from the first kind of synthetic resin, leaving the lip ring (13) of the first kind of synthetic resin of the first plate (10) to the second plate (20).

Fig. 3

0159170

## A PROCESS FOR JOINING DIFFERENT
## KINDS OF SYNTHETIC RESINS

The present invention relates to a process for joining differing kinds of synthetic resins to each other and more particularly to a process for joining them using the heat of a laser beam.

In a first conventional process for physically joining synthetic resins, each of the synthetic resins has a contact surface thereon. A metal mesh is disposed on the contact surfaces of the synthetic resins. When the mesh is heated, both of the contact surfaces of the synthetic resins are melted by the heat of the mesh. Pressure then is applied to the outsides of the synthetic resins to press them together, and the synthetic resins are cooled. As a result of this first conventional process, one of the synthetic resins is joined to the other of the synthetic resins.

In this first conventional process, both synthetic resins normally are the same kind of synthetic resin so that both have the same melting point, and so that they will blend easily into one another. If different kinds of synthetic resins are used, they may have differing melting points and may not blend into one another.

Further, in the first conventional process, a connecting wire is disposed between both of the contact surfaces of the synthetic resins to supply electricity to the mesh. Connecting the wire to the mesh between the synthetic resins requires an undesirably high amount of manual labor.

In a second conventional process for chemically joining synthetic resins, each of these synthetic resins has a contact surface thereon, and a bonding compound is disposed between both of the contact surfaces of the synthetic resins. The bonding compound normally is solid and is melted by heat, typically produced by applying high frequency or supersonic waves to the bonding compound. These waves also preferably melt the synthetic resins slightly to improve bonding. After a compressive force is applied to the synthetic resins, the synthetic resins are cooled. As a result of the second conventional process, one of the synthetic resins is joined to the other.

In the second conventional process, the synthetic resins again should be the same kind of synthetic resins, this time so that the bonding compound has the same adhesive properties for bonding to both synthetic resins. If different kinds of synthetic resins are used, the bonding compound may have differing adhesive property as to the different kinds of synthetic resin. Accordingly, the adhesive strength of the bond to one kind of synthetic resin may be different from the adhesive strength of the bond to a different kind of synthetic resin, i. e., one bond may have a weak adhesive strength. Further, in the second conventional process with different synthetic resins, the synthetic resins may not both be melted by the heat of the high frequency or supersonic waves.

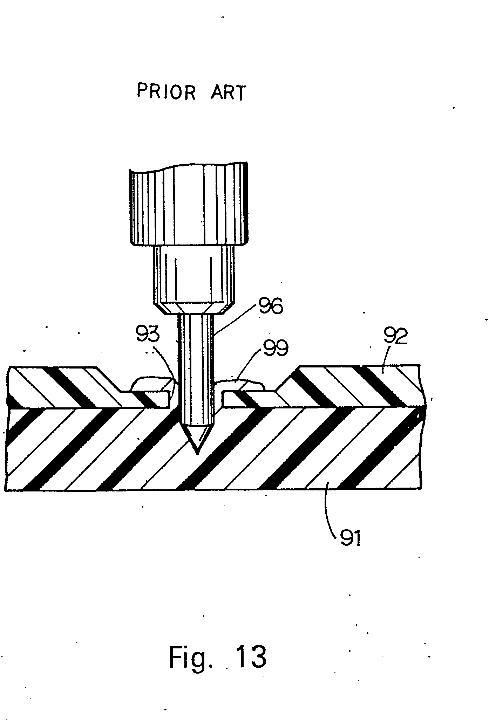

FIG. 13 shows a third conventional process for mechanically joining different kinds of synthetic resins. As shown in FIG. 13, a second plate 92 is mounted on a first plate 91. The first plate 91 is made of styrene acrylonitrile copolymer reinforced with glass filler, and the second plate 92 is made of polypropylene resin. The second plate 92 has a hole 93. A soldering iron 96 is inserted through the hole 93 of the second plate 92 into the first plate 91, and the first plate 91 is melted by the heat of the soldering iron 96. The melted first plate 91 is pushed out from the hole 93 of the second plate 92 by the soldering iron 96, formed a lip ring 99 of the first plate 91 on an outer surface of the second plate 92. By further application of the soldering iron 96, the lip ring 99 of the first plate 91 can be linked to the second plate 92.

However, a part of the first plate 91 often sticks to the soldering iron 96 after the soldering iron 96 is drawn out from the first plate 91, which should be removed from the soldering iron 96 before it is used again. All of these steps are labor intensive.

The present invention has been developed in view of the facts as described above, and its object is to provide a process for securely joining plates made of differing kinds of synthetic resins or other materials.

In order to accomplish the above-described object, a process for joining the first plate to the second plate includes several steps.

A first step includes setting the first plate. The first plate is made of a first kind of synthetic resin which can store up (absorb) the heat of a laser beam. A second step includes setting a second plate on the first plate. The second plate has a peripheral edge defining a hole therein.

A third step includes exposing a portion of the first plate to a laser beam, in particular, the portion of the first plate within the hole of the second plate. The first kind of synthetic resin of the first plate stores up the heat of the laser beam, and the portion of the first plate thereby is melted. A fourth step includes inserting a rod through the hole of the second plate into the melted first kind of synthetic resin of the first plate. The rod is made of a material having a crystalline structure, and has a diameter smaller than the diameter of the hole in the second plate. The first kind of synthetic resin melted from the first plate thereby is pushed out through the hole in the second plate onto an outer surface of said second plate. As a result, a lip ring of the first plate is formed. A fifth step includes drawing the rod out from the hole of said second plate and the first kind of synthetic resin of the first plate. The resultant plates have a lip ring of the first plate on the outer surface of the second plate, so that the lip ring of the first plate links the second plate to the first plate.

Further, the rod is made of a material having a crystalline structure such that the first kind of synthetic resin of the first plate cannot stick to the rod. Therefore, it is not necessary to remove any part of the first kind of synthetic resin of the first plate from the rod.

Other objects and novel features of this invention will become more apparent from the description which follows, taken in conjunction with the accompanying drawings, and in which:

FIG. 1 is a cross-sectional view showing a second step of a first embodiment of a process according to the present invention;

FIG. 2 is a cross-sectional view showing a third step of the process;

FIG. 3 is a cross-sectional view showing a fourth step of the process;

FIG. 4 is a cross-sectional view showing a fifth step of the process;

FIG. 5 is a cross-sectional view showing a third step of a second embodiment of a process according to the present invention;

FIG. 6 is a cross-sectional view showing a fourth step of the second embodiment of the process;

FIG. 7 is a cross-sectional view showing a fifth step of the second embodiment of the process;

FIG. 8 is a cross-sectional view showing a third step of a third embodiment of a process according to the present invention;

FIG. 9 is a cross-sectional view showing a fourth step of the third embodiment of the process;

FIG. 10 is a cross-sectional view showing a fifth step of the third embodiment of the process;

FIG. 11 is a diagram showing the transmittance of 20 wt% glass filler reinforced styrene acrylonitrile copolymer with 0.1 wt% carbon black;

FIG. 12 is a diagram showing the transmittance of polypropylene without any absorptive additives; and

FIG. 13 is a cross-sectional view showing a third conventional process.

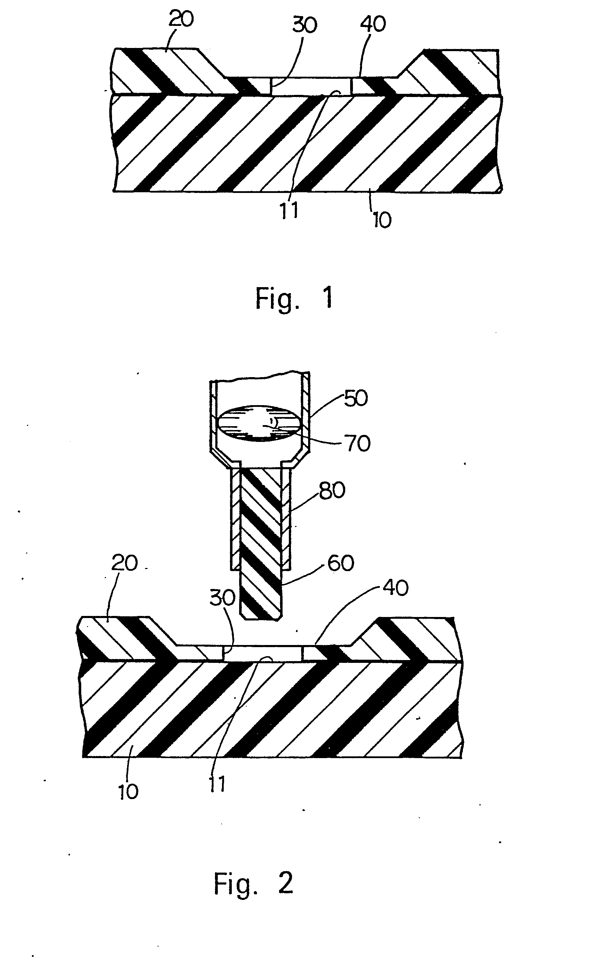

Referring to FIG. 1, a first step of a process for joining different kinds of synthetic resins includes providing a first plate 10 of a first kind of synthetic resin. The first kind of synthetic resin can store up the heat of a laser beam. For example, the first kind of synthetic resin may be. styrene acrylonitrile copolymer reinforced with 20 wt% glass filler, and including 0.1 wt% carbon black as an additive. The color of the first plate 10 of this composition is black.

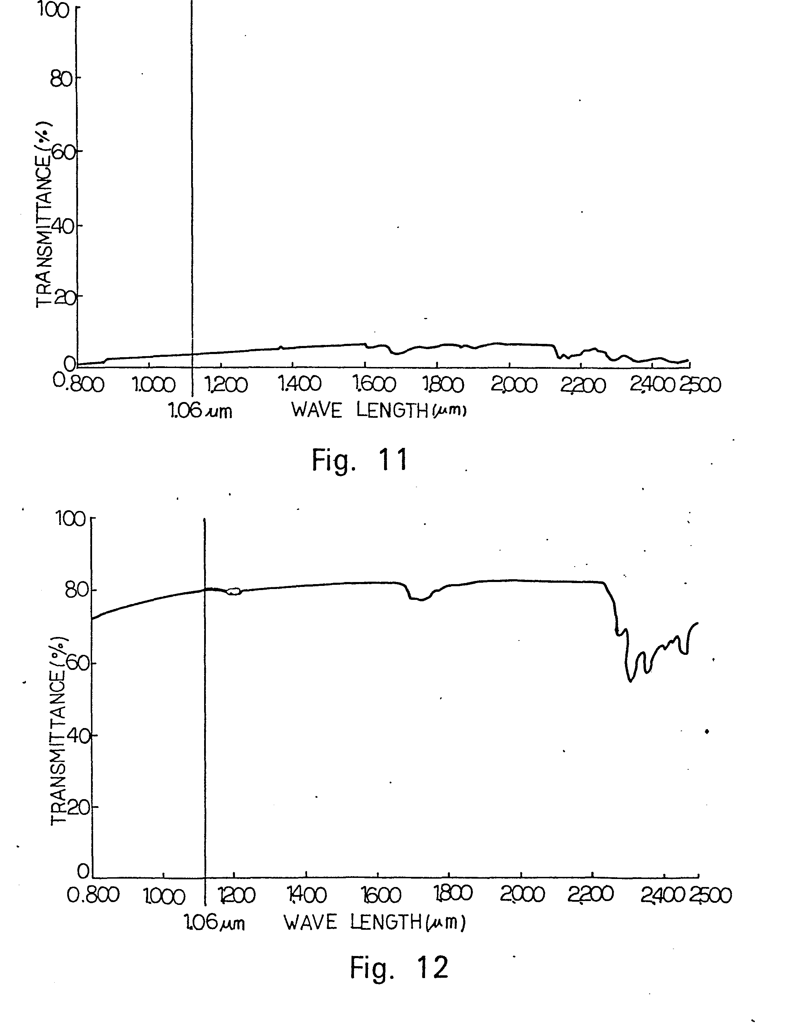

As shown in FIG. 11, the reinforced styrene acrylonitrile copolymer can transmit only a little of a Nd:YAG($Nd^{+3}$:$Y_3Al_5O_{12}$) laser beam. When the wavelength of the laser beam is 1.06 $\mu$m, the reinforced styrene acrylonitrile copolymer can transmit about 4% of a total amount of the Nd:YAG laser beam. Therefore, the reinforced styrene acrylonitrile copolymer can store up most of the heat of the total amount of the laser beam. Alternatively, the first kind of synthetic resin may be polypropylene resin having carbon black as an additive.

A second step of the process includes setting a second plate 20 on the first plate 10. The second plate 20 is made of a second kind of synthetic resin or other material and has a peripheral edge 30 defining a hole therein.

If formed of a synthetic resin, the second kind of synthetic resin preferably can transmit most of the laser beam. For example, the second kind of synthetic resin may be polypropylene resin without any absorptive additives. As shown in FIG. 12, when the wavelength of the Nd:YAG laser beam is 1.06 $\mu$m, the polypropylene resin without any absorptive additives can transmit about 75% of the total amount of the Nd:YAG laser beam. Accordingly, the second plate 20 cannot store up the heat of the Nd:YAG laser beam. Alternatively, the second kind of synthetic resin may be styrene acrylonitrile copolymer, poryethylene, vinyl chloride, 6-nylon resin or 66-nylon resin all without any absorptive additives. The color of the plate 20 is milky white.

The second plate 20 also may be made of metal instead of synthetic resin, including stainless steel, steel, nickel, aluminum and copper.

As shown in FIG. 2, a third step of the process includes setting a nozzle 50 of the laser beam above the hole of the second plate 20, and exposing a portion 11 of the first plate 10 to the laser beam, in particular, the portion 11 of the first plate 10 within the hole of the second plate 20. The laser beam radiates from the nozzle 50 through a convex lens 70, and a rod 60. The rod 60 is made of polypropylene having a crystalline structure. An upper portion of the rod 60 is covered with aluminum foil 80. The diameter of the rod 60 is smaller than the diameter of the hole of the second plate 20, and the rod 60 can transmit most of the total amount of the laser beam at wavelengths of 1.06 $\mu$m and less. The end of the rod 60 may be in contact with the outer surface of the portion 11 of the first plate 10.

When the portion 11 of the first plate 10 is exposed to the laser beam, the first plate 10 stores up the heat of the laser beam.

- 6 -   0159170

Therefore, the portion 11 of the first plate 10 is melted by the heat which is stored up in the first plate 10.

With the preferred resins, the most suitable laser beam is a Nd:YAG laser beam, however, other laser beams may be used, including Nd:glass laser beam; ruby laser beam; helium:neon (He:Ne) gas laser beam; krypton (Kr) gas laser beam; argon (Ar) gas laser beam; hydrogen ($H_2$) gas laser beam and nitrogen ($N_2$) gas laser beam.

With the preferred resins, a suitable wavelength of the laser beam for joining different kinds of synthetic resins is about 1.06 μm and less. When a wavelength of the laser beam is more than 1.06 μm, the rod 60 cannot transmit the laser beam.

With the preferred resins, the laser beam should be from 5W through 100W in power, in order to melt the portion 11 of the first plate 10. When the generating power of the laser beam is less than 5W, the portion 11 of the first plate 10 cannot be melted by the heat of the laser beam which is stored up in the first plate 10. When the generating power of the laser beam is more than 100W, the portion 11 of the first plate 10 may vaporize or may be transmuted.

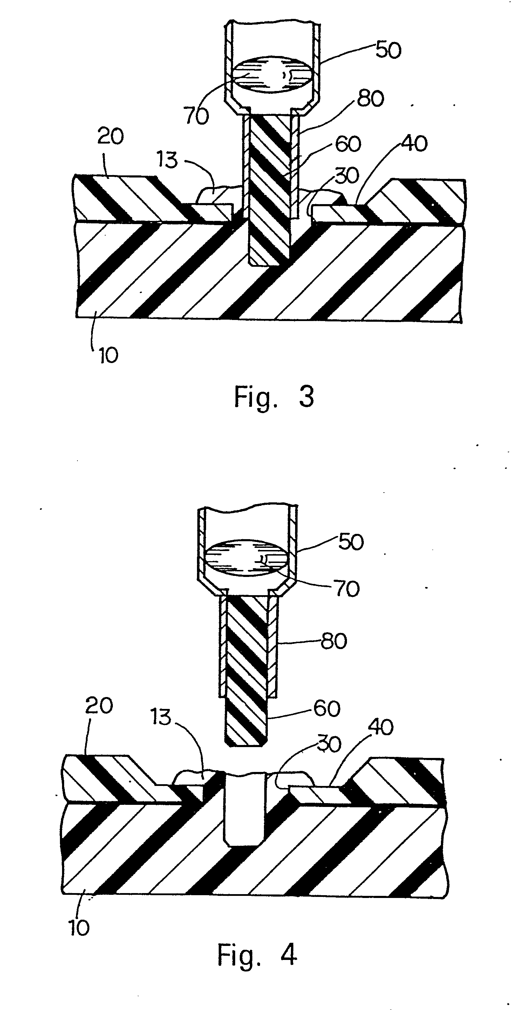

As shown in FIG. 3, a fourth step of the process includes inserting the rod 60 through the hole of the second plate 20 and into the portion 11 of the first plate 10, after stopping a irradiation by the laser beam. The first kind of synthetic resin melted from the first plate 10 is pushed out from the hole of the second plate 20, so that a lip ring 13 of the first plate 10 is formed on an outer surface 40 of the second plate 20.

As shown in FIG. 4, a fifth step of the process includes drawing out the rod 60 from the hole of the second plate 20 and the first kind of synthetic resin of the first plate 10. The rod 60 is made of polypropylene having a crystalline structure, so that the first kind of synthetic resin of the first plate 10 does not stick to the rod 60.

A suitable interval between the forth step and the fifth step is within 2 seconds. If the interval is too long, the rod 60 may be melted by the heat which is stored up in the first plate 10.

A sixth step of the process includes cooling the first plate 10 which is jointed to the second plate 20 through the lip ring 13 thereof.

Therefore, by this process, the first kind of synthetic resin can be joined securely to the second kind of synthetic resin.

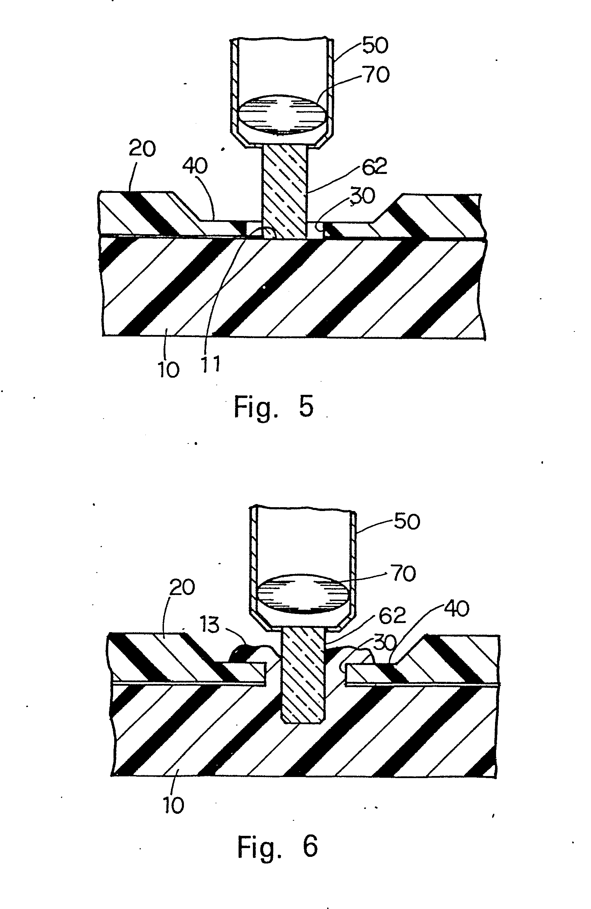

FIG. 5 through FIG. 7 show a third step through a fifth step of a second embodiment of a process for joining different kinds of synthetic resins. Most of steps in the second embodiment are the same as steps in the first embodiment which is described in the above, however, the second embodiment has several differences. Description will be given hereunder of the several differences in the second embodiment.

As shown in FIG. 5, in the third step of the second embodiment of the process, an end of a rod 62 is in contact with a portion 11 of a first plate 10 during a irradiation by the laser beam.

In the fourth step of the process of the second embodiment, the rod 62 is inserted into the first kind of synthetic resin of the first plate 10 during the irradiation of the laser beam. The first kind of synthetic resin melted from the first plate 10 thereby is pushed out from the hole of the second plate 20, so that a lip ring 13 of the first plate 10 is formed on an outer surface 40 of the second plate 20.

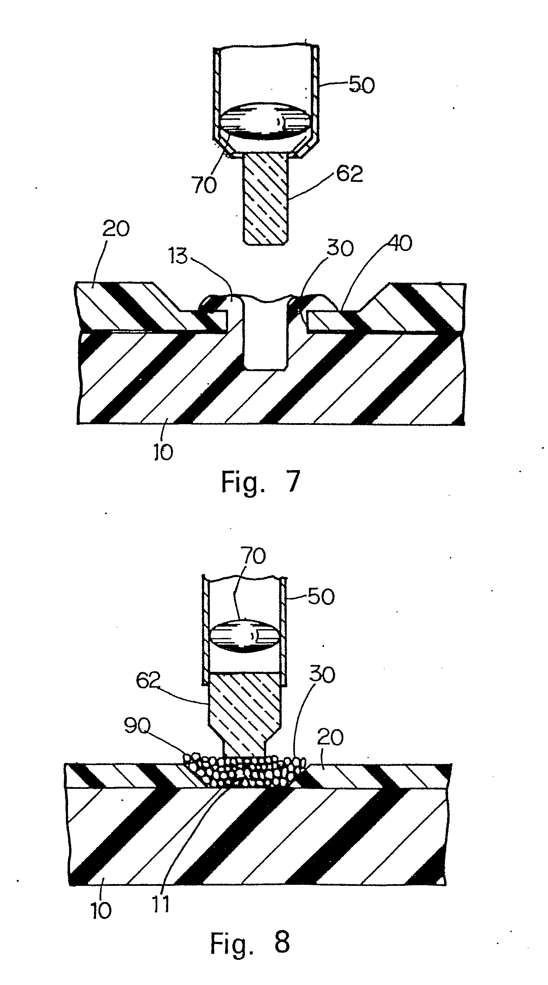

As shown in FIG. 7, in the fifth step of the process, the rod 62 is drawn out from the first kind of synthetic resin. The rod 62 is made of glass so that the first kind of synthetic resin cannot stick to it.

Therefore, in the second embodiment of the process, the first kind of synthetic resin can be joined securely to the second kind of synthetic resin through the lip ring 13 of the first plate 10.

FIG. 8 through FIG. 10 show a third step through a fifth step of a third embodiment of a process for joining different kinds of synthetic resins. Most of steps in the third embodiment are the same as the steps in the first embodiment which is described in the above, however, the third embodiment has several differences. Description will be given hereunder of the several differences in the third embodiment.

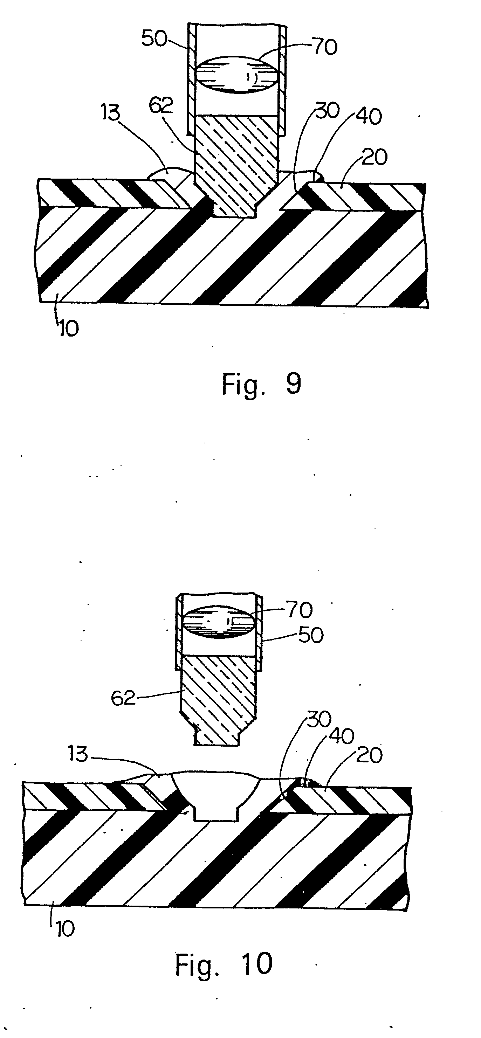

As shown in FIG. 8, the third step of the third embodiment of the process includes filling in the hole of the second plate 20 with a powder 90. The powder 90 is made of the first kind of synthetic resin of which the first plate 10 is formed and a suitable diameter of the powder 90 is from 0.5 $\mu$m through 3mm. A rod 62 is made of glass and the powder 90 is melted easily by the heat of the laser beam. The melted powder 90 sticks to a portion 11 of the first plate 10, so that upon lowering of the rod 62, a lip ring 13 is formed from the melted powder 90, as shown in FIG. 9. The melted powder 90 does not stick to the rod 62, because the rod 62 is made of glass. Therefore, the first plate 10 is securely joined to the second plate 20 through the lip ring 13 of the first plate 10, after the rod 62 is drawn out from the first kind of synthetic resin of the first plate 10, as shown in FIG. 10.

As has been described above, according to the process for joining different kinds of synthetic resins or other materials of the present invention, one kind of synthetic resin can be joined securely to a different kind of synthetic resin. Further techniques for joining different kinds of synthetic resins may be found in the applications owned by applicants' assignee, filed in the European Patent Office concurrently with the present application and all entitled "A Process For Joining Different Kinds of Synthetic Resins".

It should be apparent to one skilled in the art that the above-described embodiments are merely illustration of a few of the many possible specific embodiments of the present invention. Numerous and varied other arrangements can readily be devised by those skilled in the art without departing from the spirit and scope of the invention, which is defined by the following claims.

## CLAIMS

1. A process for joining a first plate (10) comprising a first kind of synthetic resin, to a second plate (20) having a peripheral edge (30) defining a hole in the second plate (20), characterised in that the first kind of synthetic resin is adapted to store the heat of a laser beam and a rod (60,62) having a diameter smaller than a diameter of the hole of the second plate (20), and formed from a material adapted to transmit a laser beam is inserted through the hole of the second plate (20) and into the first kind of synthetic resin melted from the first plate (10), by a laser beam transmitted by said rod, the first kind of synthetic resin melted from the first plate (10) being pushed out from the hole of the second plate (20) onto an outer surface (40) of the second plate (20) to form a lip ring (13), and the rod (60) is withdrawn from the hole of the second plate (20) and the first plate (10) leaving the lip ring (13) of the first kind of synthetic resin to link the second plate (20) to the first plate (10).

2. A process according to claim 1, characterised in that the rod (60) has a crystalline structure.

3. A process according to claim 2, characterised in that the substance of the rod (6) comprises crystalline polypropylene.

4. A process according to claim 1, characterised in that the substance of the rod (62) compresses gear.

5. A process according to any preceding claim, characterised in that the first kind of synthetic resin has an absorptive additive.

6. A process according to claim 5, characterised in that the absorptive additive comprises carbon black.

7. A process according to any proceding claim characterised in that the first kind of synthetic resin compresses styrene/acrylonitrile copolymer or polypropylene, both having carbon black as an additive.

8. A process according to any preceding claim characterised in that the second plate comprises styrene/acrylonitrile copolymer, polyethylene, vinyl chloride, 6-nylon resin, 66-nylon resin, stainless steel, steel, nickel, aluminum or copper.

9. A process according to any preceding claim characterised in that the laser beam is generated by a Nd:YAG laser, Nd:glass laser, ruby laser, helium:neon (He:Ne) gas laser, Krypton (Kr) gas laser, argon (Ar) gas laser, hydrogen $(H_2)$ gas laser or nitrogen $(N_2)$ gas laser.

10. A process according to any preceding claim characterised in that the hole of the second plate (20) is filled with a powder (90), fusible under the influence of the laser beam or of heat transmitted from the melted first resin.

11. A process according to claim 10, characterised in that the powder comprises the first kind of synthetic resin.

Fig. 1

Fig. 2

0159170

Fig. 3

Fig. 4

Fig. 5

Fig. 6

Fig. 7

Fig. 8

Fig. 9

Fig. 10

Fig. 11

Fig. 12

PRIOR ART

Fig. 13